# EUROPEAN PATENT SPECIFICATION

(11) **EP 2 215 813 B1**
(45) Date of publication and mention of the grant of the patent: **21.12.2016**
(21) Application number: 08847040.6
(22) Date of filing: 07.11.2008
(51) Int. Cl.: H04M 1/725

(54) **WIRELESS DEVICE HAVING CONFIGURABLE MODES**
DRAHTLOSE VORRICHTUNG MIT KONFIGURIERBAREN MODI
DISPOSITIF SANS FIL AYANT DES MODES CONFIGURABLES

(30) Priority: 07.11.2007 US 936350
(43) Date of publication of application: 11.08.2010
(73) Proprietor: QUALCOMM Incorporated, San Diego, CA 92121 (US)
(72) Inventor: TAYLOR, Kirk S., San Diego California 92121 (US); HOEFEL, Guilherme Luiz Karnas, San Diego California 92111 (US); STEENSTRA, Jack, San Diego California 92121 (US); CHEN, Liren, San Diego California 92121 (US); SUTA, Lucian, San Diego California 92121 (US); ZHANG, Yang, San Diego California 92121 (US)
(74) Representative: Dunlop, Hugh Christopher
(86) International application number: PCT/US2008/082872
(87) International publication number: WO 2009/062086

(56) References cited:
- EP-A- 1 850 608
- US-A1- 2004 235 464
- US-A1- 2006 056 613
- US-A1- 2006 205 394

## Description

### BACKGROUND

### Field

The present relates to wireless device having user configurable modes and, more specifically to cellular telephones being reconfigurable based on user input and location.

### Background

Wireless devices, and particularly cellular telephones, are becoming ubiquitous in society. These devices allow consumers to be accessible in almost all locations in almost all times of the day. Additionally, today's wireless devices have more computer power than ever before. Wireless devices allow verbal communication, short message service, text messaging, electronic mail, internet applications, electronic games, video and audio streaming, and the like.

While access to the various applications is beneficial, it creates numerous difficulties in numerous situations. Some of the difficulties relate in particular to safety and health concerns. Other difficulties relate in particular to common courtesy. Sill other difficulties relate to the ability to use the wireless device in particular environments.

Safety concerns can arise in numerous situations. One potential safety issue may be accessing email accounts while driving, which would provide a potentially unsafe or dangerous condition. Another safety issue arises when, for example, the high radio frequency transmissions of conventional cellular telephone transmissions interfere with other electronic equipment, such as for example, medical equipment or aviation equipment.

Common courtesy issues generally arise in public settings. It is generally accepted that talking on a cellular telephone is discourteous in a theater or the like. Other discourteous wireless device usages may include using the devices during meetings, in crowded waiting rooms, or the like.

Still other situations are simply difficult environments for the wireless device usage. For example, it may be difficult to use a cellular telephone in a machine shop where loud noise makes it difficult to communicate. A gym or weight room may provide a similar difficult use environment. Alternatively, a low light or visibility area may make use of any wireless device difficult, such as, for example, a photograph dark room or the like.

Thus, it would be desirous to provide a wireless device that has configurable modes of operation to address the above and other needs of the industry.

US 2004/235464 relates to a device for a change of settings of applications implemented in a mobile terminal. In order to facilitate a change of such settings, the device comprises a storage portion for storing a plurality of configurations. Each stored configuration is associated to at least one location and each stored configuration defines settings for applications implemented in the mobile terminal. The device further comprises a controlling portion for receiving information on a current position of the mobile terminal, for retrieving automatically a configuration associated to a location identified by the position information from the storage portion, and for changing settings of applications implemented in the mobile terminal according to the retrieved configuration.

### SUMMARY

In accordance with the present invention, there is provided a system as set out in claim 1 and a method as set out in claim 6.

### BRIEF DESCRIPTION OF THE DRAWINGS

FIG. 1 is a block diagram illustration of a wireless communication system of an exemplary embodiment of the disclosure;
FlG. 2 is a block diagram illustration of a remote station of an exemplary embodiment;
FIG. 3 is a diagrammatic illustration of a memory structure of an exemplary embodiment;
FIG. 4 is a flow chart diagram illustration of operational steps of configuring a remote station of an exemplary embodiment;
FIG. 5 is a flow chart diagram illustration of-operational steps of configuring a remote station of an exemplary embodiment;
FIG. 6 is a flow chart diagram illustration of operational steps of entering a setting configured according to an exemplary embodiment;
FIG. 7 is a flow chart diagram illustration of operational steps of entering a setting configured according to an exemplary embodiment; and
FIG. 8 is a block diagram illustration of an area having a predefined setting configuration of an exemplary embodiment.

### DETAILED DESCRIPTION

The technology of the present application will now be described with specific reference to the figures. For convenience, the technology will be explained with reference to a cellular telephone. However, on reading the disclosure, one of ordinary skill in the art will now recognize that the technology explained herein could be used in numerous wireless or mobile devices including, for example, cellular telephones, pagers, laptop computers, desktop computers, handheld computers, PDAs, mobile electronic mail devices, electronic games, MPEG players, MP-3 players, personal navigation units, and the like. Thus, in this written description, reference to a cellular telephone should be construed broadly to encompass other wireless or other mobile devices. Moreover, technology of the present application is described with reference to specific exemplary embodiments. The word "exemplary" is used herein to mean "serving as an example, instance, or illustration." Any embodiment described herein as "exemplary" is not necessarily to be construed as preferred or advantageous over other embodiments. Additionally, all embodiments described herein should be considered exemplary unless otherwise stated.

The word "network" is used herein to mean one or more conventional or proprietary networks using an appropriate network data transmission protocol Examples of such networks include, PSTN, LAN, WAN, WiFi, WiMax, Internet, World Wide Web, Ethernet, other wireless networks, and the like.

The words "wireless device," "mobile devices," and "cellular telephone" are generally used interchangeably in the written description and mean one or more conventional or proprietary wireless devices including, cellular telephones, pagers, two-way radios, wireless computers (laptops, desktops, and handhelds), PDAs, electronic games, MPEG players, MP-3 players, and the like.

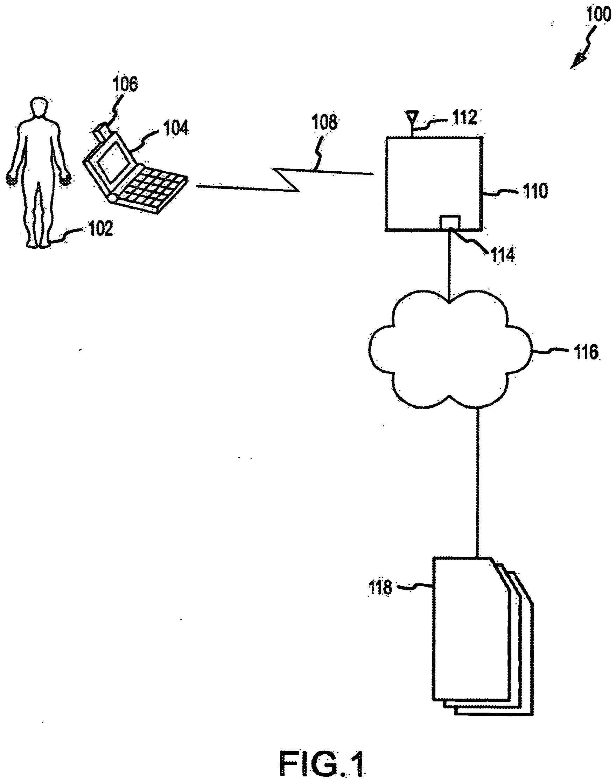

Referring first to figure 1, a cellular communication system 100 using technology of the present invention is illustrated. In this exemplary system 100, a user 102 is provided with a cellular telephone or wireless device 104. Wireless device 104 would include at least one radio frequency antenna 106, but may have multiple antennas for different applications. Frequently, wireless device 104 transmits and receives radio frequency signals over multiple operational frequencies that may require either multiple antennas or multiple band antennas that operate over the necessary frequencies. While generally described as a cellular telephone due to the ubiquitous nature of cellular telephones, as described above, wireless device 104 may comprise any number of different types of wireless or mobile devices.

Wireless device 104 is connected via a wireless communication data link 108 to a base station 110. Base station 110 has an antenna 112. Antenna 106 and base station antenna 112 can transmit and receive respective radio frequency signals to allow data transfer between wireless device 104 and base station 110. Base station 110 may have a network interface 114 such that it is interconnected to a network 116. Network 116 may be several networks, but network 116 will be described as a single network for convenience. Network 116 typically is connected to servers 118 and/or service centers 120 as necessary.

System 100 is shown with a single wireless device 104 connected to a single base station 110. It is envisioned, however, that system 100 would support multiple wireless devices 104, multiple base station 110 and multiple networks as a matter of design choice. In these instances, it may be beneficial to incorporate security measures in the system and assign unique identifiers to the remote stations.

Wireless device 104 communicates with base station 110 using a conventional protocol, such as CDMA or the like, although any analog or digital protocol is acceptable. Moreover, while described using a cellular network for communication and data transfer between wireless device 104 and base station 110, other wireless or wired networks are possible.

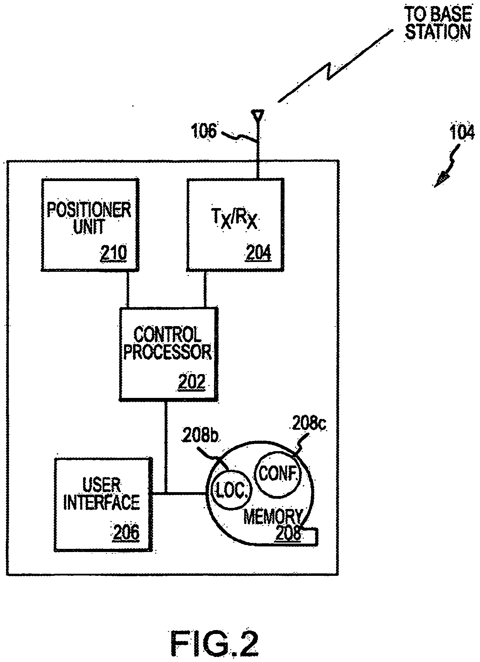

Referring now to figure 2, an exemplary embodiment of wireless device 104 is shown in more detail wireless device 104 includes several components including a control processor 202. Control processor 202 controls the major functions of wireless device 104 including providing computing functionality to process the inputs and/or data required for the operation of wireless device 104. transmit/receive circuitry 204 is connected to control processor 202 and antenna(s) 106. Transmit/receive circuitry 204 may be one or more actual circuits and may work over various protocols and wavelengths. Transmit/receive circuitry 204 functions typical of such components as used in wireless communications, such as: modulating signals received from control processor 202 that are to be transmitted from antenna 106, and demodulating signals received at antenna 106 to be delivered to sent to control processor 202 or other components. Control processor 202 provides a means to configure applications and modes associated with wireless device 104. For example, control processor 202 controls the configuration of the remote station volume or the like.

Wireless device 104 also includes a user interface 206. User interface may comprise a user interface typical of, for example, a cellular telephone or typical of the particular wireless device, such as, for example, a keyboard, an alphanumeric pad, a mouse, a track ball, a touch screen, a voice recognition, a microphone, speakers, data ports, or the like. The user 102 accesses, receives, and transmits information via user interface 206. The user interface 206 provides one means by which the control processor can be caused to initiate configuration of applications and modes, such as, for example, volume changes or the like.

Wireless device 104 includes a memory 208 connected to control processor 202. Memory 208 may store data and processing instructions necessary or convenient for operation of remote station 104. Memory 208 may include volatile and/or nonvolatile memory on any suitable media Memory 208 may include a configuration segment 208c. Configuration segment may store standardized or user defined configurations for wireless device 104 as will be explained further below.

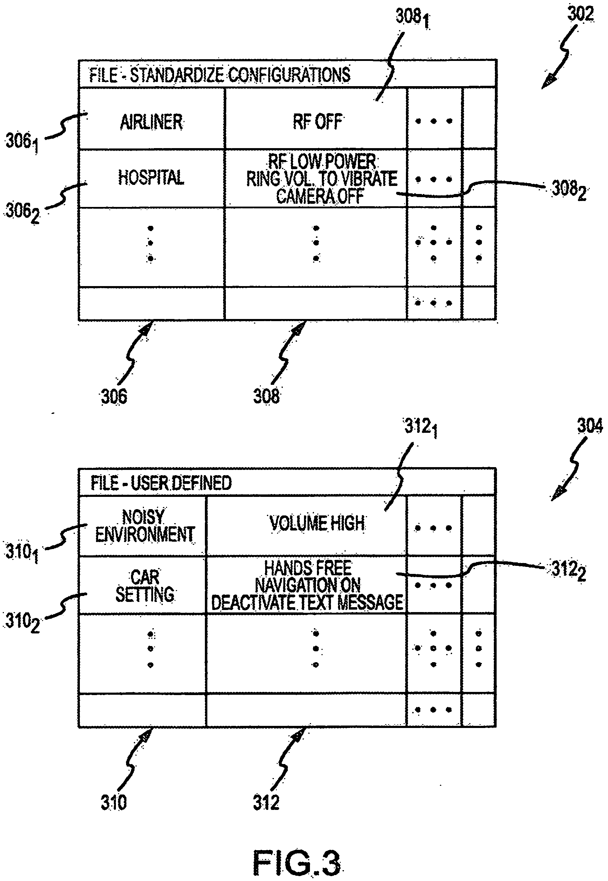

Referring to figure 3, configuration segment 208c of memory 208 is shown in more detail. Configuration segment is shown as a standard database spreadsheet, but any conventional memory structure is useable. As shown, configuration segment 208 may have multiple files, for example, file 302 may relate to standardized settings based on, for example, standards bodies. File 304 may rebate to user defined setting generally based on expected usage or the like. File 302 may be broken down into a number of fields relating to standardized setting. One exemplary standardized setting may be airliner settings as shown in field 306₁. Field 308₁ may contain the standardized configuration for the setting, including, for example, RF transmitter/receiver Off, which is currently required by FAA standards. Other application and mode configurations may be required by airliner setting and would be contained in field 308. Another exemplary standardized setting includes a hospital or medial setting as shown in field 306₂. Field 308₂ associated with the setting would include specific configuration information for applications and modes for hospitals or the like, including for example, RF transmitter to low power setting to reduce potential interference with medical equipment, ring volume to vibrate only, camera functionality off to provide patient privacy, etc. These are but two examples of potential standardized settings and configuration information, but any number of standardized, configurations and settings may be provided as a matter of design choice.

Similarly, file 304 may comprise user defined setting. For example, setting 310, may include a "noisy environment setting," such as, for example, a machine shop or gym. In this setting, the configuration information field 312, may be arranged to configure the remote station to high volumes, ring tone, microphone, and speakers, to facilitate use. Setting 310₂ may include a "car setting." Configuration information field 312₂ may contain instructions to configure the remote station for hands free operation, activate a navigation module, and deactivate text messaging. These are but two examples of potential user defined configurations, but any number of user defined configurations and settings may be entered into configuration segment 208c of memory 208. Thus, if a user called up the car setting on the user interface, the control processor would access the memory and extract and implement the configuration based on the configuration information tied to that setting. This avoids the need for the user to individually reprogram the individual applications or modes to the desired configuration.

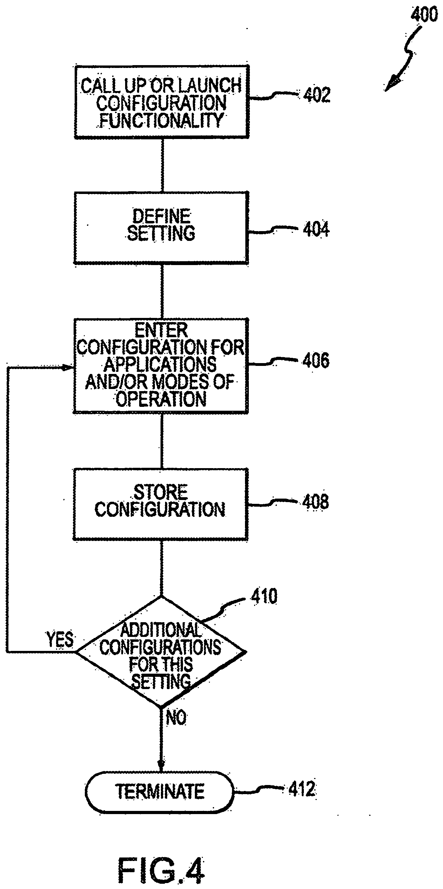

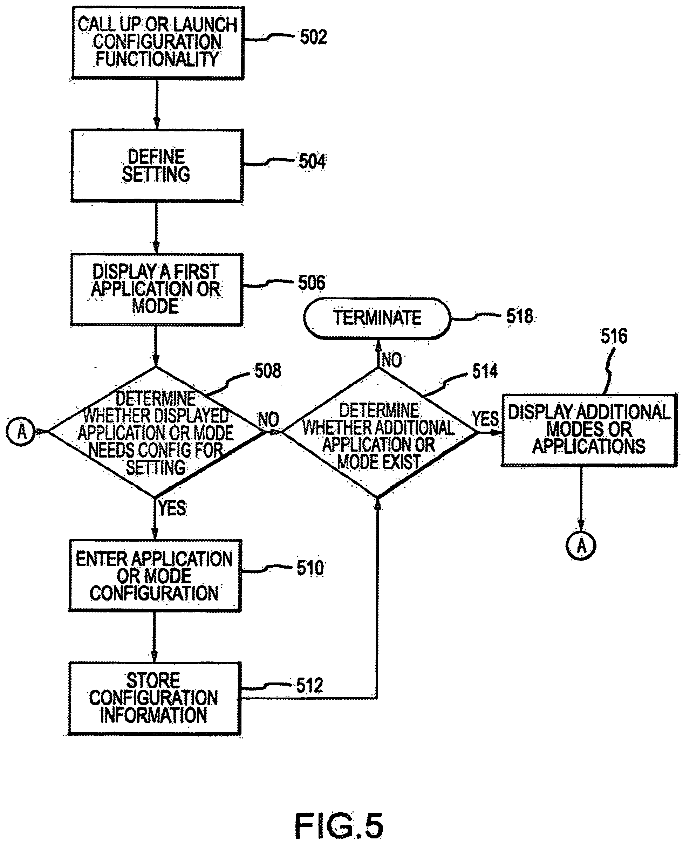

Referring now to figure 4, operational steps for providing a user defined setting and configuration information for wireless device 104 are described for an exemplary embodiment. First, user 102 accesses user interface 206 to call up the configuration functionality, step 402. Next, the user defines setting 310₁₋ₙ, step 404. While it is envisioned that setting 310 would define a particular usage, such as machine shop, car, theater, etc, the setting 310 could be modes of operation, such as, for example, quiet, loud, traveling, etc. Moreover, its possibly settings 310 could simply be numbers or designations, such as, setting 1. A, α, etc. In other words, designations for settings 310 are largely a matter of user preference. Next, the user would enter configuration information via the user interface 206, step 406. Possible configuration information include, for example, modes of operation, such as for example, volume, display lighting, and applications, such as, for example, navigation (a.k.a. GPS, camera settings, internet settings, or the like. Control processor 202 would cause the configuration information to be stored in an appropriate field 312₁₋ₙ, step 408. Next, it would be determined whether additional configuration information was required for the setting 310, step 410. For example, a display may be provided to the user requesting whether additional configurations are required or desired. If the user answers, yes (i:e., additional configurations are requited or desired), control reverts to step 406 where the user wound enter additional configuration information. If the answer is no, the process terminales, step 412. Referring to figure 5, alternative operational steps for providing user defined settings for wireless device 104 is described for an exemplary embodiment. First, user 102 accesses user interface 206 to call up the configuration functionality, step 502. next, the user defines setting 310_{1-n,} Step 504. control processor then displays an application or mode to a user on user interface 206, step 506. The user than determines whether the displayed application or mode is required to be configured for the particular setting, step 508. If it is determined that the application Or mode is required to be configured, the user enters the configuration information desired, step 510, which is stored, step 512. After the configuration is entered or if it is determined that the particular application does not need to be configured for the particular setting, it next is determined whether additional applications or modes exist, step 514. If additional applications or modes exist, that application, or mode is displayed, step 516, and control reverts to step 508. If it is determined that additional applications or modes do not exist, the process ends, step 518, and the setting 310₁₋ₙ with associated configuration information 312₁₋ₙ are stored as a user defined setting that can be initiates by the user. Operational steps of figure 4 and figure 5 could, of course, be combined into a single operate. Moreover, the steps outlined in figures 4 and 5 are exemplary and more, less, or different steps are contemplated, and the steps may be interchanged or re-arranged.

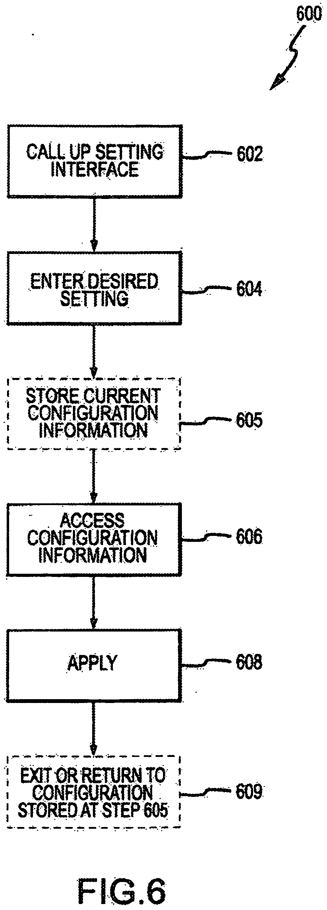

Referring now to figure 6, operational steps for manually activating a programmed setting are provided in an exemplary embodiment. First, a user would user interface 206 to call up a setting interface, step 602. Next, the user would enter the desired setting 310₁₋ₙ, step 604. Control processor would access configuration information in corresponding field 310₁₋ₙ, step 606, and apply the settings, step 608. Optionally, prior to re-configuring wireless device 104, at step 605, control processor may store existing settings and configurations of the wireless device. Thus, when the user exits the user defined setting, the wireless device can be returned to the previous configuration. Using conventional methodologies, the functionality activating a programmed setting may be assigned to a hotkey or speed dial key to facilitate user 102 entering the desired configuration.

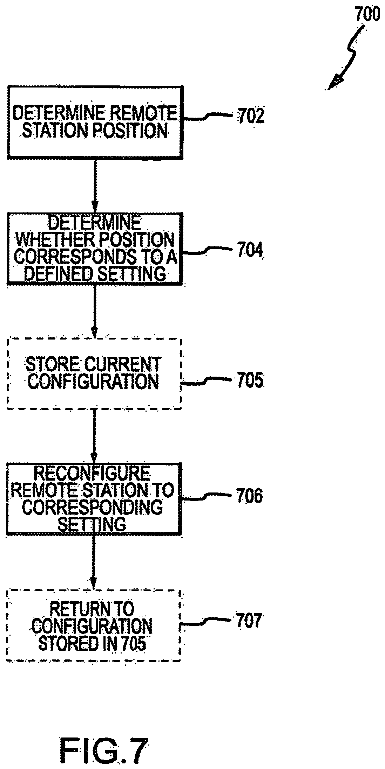

Referring back to figure 2, wireless device 104 may have a positioner unit 210, such as, for example, a global positioning unit or the like as those units are commonly used in the art. Positioner unit 210 may access a location unit 2081, which may be a database stored in memory 208 and/or remotely accessible via server 118. Positioner unit 210 may interact with location unit 2081 and settings 306 and 310 to automatically place wireless device 104 in a standard or user defined setting. In other words, positioner unit 210 and location unit 2081 may cause control processor 202 to configure wireless device 104 automatically, For example, user 102 may provide user defined setting 310ₓ as a movie theater setting, for example. In movie theater setting, wireless device may have defined configuration information 312_{y} of, for example, ring tone - to vibrate, display lighting - to brightest, speaker - to low, etc. As shown by figure 7, which provides operational steps for automatically activating a programmed setting for an exemplary embodiment, positioner unit 210 determines a position of wireless device 104, step 702. Location unit 2081 determines whether the location corresponds to a defined setting 306 or 310, step 704. In this example, the user may enter a movie theater, which is a known location in location unit 2081. If a location correspondence is determined, control processor 202 configures wireless device 104 based on the stored requirements, step 706. Optionally, the original configuration settings may be stormed step 705 and the original configuration settings restored on leaving the movie theater, step 707. Of course the positioning and locating functions, as well as the setting and configuration storage may occur locally at wireless device 104 oar remotely at server 118.

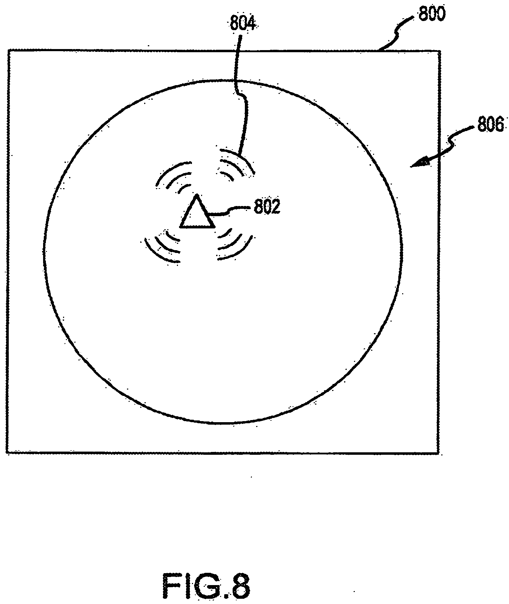

Certain locations, such as, for example, hospitals that have predefined settings may be configured as indicated above. Alternatively, as shown in figure 8, a location 800 may have a transmitter 802 that broadcast a configuration signal 804 in a defined area 806. Wireless device 104 entering the area 806 would receive the configuration signal 804 at antenna 106. Transmit and receive circuitry would provide a usable signal to control processor 202, which would configure: wireless device in accordance with standard predefined settings 306 configuration instructions 308.

Those of skill in the art would understand that information and signals may be represented using any of a variety of different technologies and techniques. For exampte, data, instructions, commands, information, signals, bits, symbols, and chips that may be referenced throughout the above description may be represented by voltages, currents, electromagnetic waves, magnetic fields or particles, optical fields or particles, or any combination thereof.

Those of skill would further appreciate that the various illustrative logical blocks, modules, circuits, and algorithm steps described in connection with the embodiments discloses herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in Random Access Memory (RAM), flash memory. Read Only Memory (ROM), Electrically Programmable ROM (EPROM), Electrically Erasable programmable ROM (EEPROM), registers, hard disk, a removable disk, a CD-ROM, or any other form of storage medium known in the art. An exemplary storage medium is coupled to the processor such the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the scope of the invention. Thus, the present invention is not intended to be limited to the embodiments shown herein but is to be accorded the widest scope consistent with the principles and novel features disclosed herein.

## Claims

1. A system including a wireless device (104) and a server (118), wherein
said wireless device (104) comprises:
a user interface;
a control processor (202);
transmit and receive circuitry coupled to the control processor; and
a memory, the memory comprises at least a configuration segment that contains a user defined setting, associated with a location, the user defined setting containing configuration information for the wireless device (104), such that when defining settings, the user interface is adapted to transmit the user defined setting to the control processor (202), and the control processor causes configuration information to be stored, and when configuring the wireless device, the control processor (202) is adapted to use the user defined setting to configure the wireless device (104) using the configuration information contained in the user defined setting,
wherein the wireless device initially has an original configuration setting;
the system being **characterised in that**
the wireless device (104) is adapted to access a positioning unit (210) and a locating unit (2081) at the server (118) through a network connection, said positioning unit (210) adapted to determine the position of the wireless device (104) and said locating unit (2081) adapted to determine whether the position of the wireless device (104) corresponds to the location and, when it is determined that the position of the mobile device corresponds to the location, cause the control processor (202) to configure the wireless device (104) based on the user defined setting,
wherein, the wireless device (104) is configured to store the original configuration setting and, when it is determined that the position of the wireless device (104) no longer corresponds to the location, restore the original configuration setting.

2. The system according to claim 1, wherein the configuration segment further comprises predefined settings containing standardized configuration information.

3. The system according to claim 2, wherein the predefined settings correspond to at least one of federal aviation administration requirements associated with airliners or the food and drug administration requirements associated with hospitals.

4. The system according to claim 1, wherein the configuration information includes at least one application configuration and/or at least one mode configuration.

5. The system according to claim 4, wherein the at least one mode configuration is selected from the group of modes consisting of: wireless device ring setting, wireless device volume, wireless device display brightness, or wireless device ring tone.

6. A method of configuring a wireless device (104) to user defined settings comprising:
launching a configuration application at the wireless device (104), wherein the wireless device has an original configuration setting;
remotely
identifying a user defined setting stored in memory to which the wireless device (104) will be configured, said identifying comprising, at a server remote from the wireless device (104), establishing a position of the wireless device (104) and determining a first location based on the position and providing the first location as the user defined setting if the location corresponds at least one use defined setting;
storing the original configuration setting;
retrieving configuration information relating to at least one application or at least one mode of the wireless device (104) from memory;
configuring the wireless device (104) based on the configuration information retrieved relating to the at least one application or the at least one mode;
after configuring the wireless device, determining that the wireless device has left the first location and, in response, restoring the original configuration setting.

7. The method according to claim 6, further comprising establishing a hotkey to effectuate the launching, identifying, retrieving, and configuring steps.

## Patentansprüche

1. Ein System, dass eine Drahtloseinrichtung (104) und einen Server (118) beinhaltet, wobei die Drahtloseinrichtung (104) Folgendes aufweist:
eine Nutzerschnittstelle;
einen Steuerprozessor (202);
Sende- und Empfangsschaltkreise, die an den Steuerprozessor gekoppelt sind; und
einen Speicher, wobei der Speicher wenigstens ein Konfigurationssegment aufweist, das eine nutzerdefinierte Einstellung beinhaltet, die mit einem Standort assoziiert ist, wobei die nutzerdefinierte Einstellung Konfigurationsinformation für die Drahtloseinrichtung (104) beinhaltet, so dass, beim Definieren von Einstellungen, die Nutzerschnittstelle ausgelegt ist zum Senden der nutzerdefinierten Einstellung an den Steuerprozessor (202), und der Steuerprozessor veranlasst, dass Konfigurationsinformation gespeichert wird, und beim Konfigurieren der Drahtloseinrichtung, der Steuerprozessor (202) ausgelegt ist zum Verwenden der nutzerdefinierten Einstellung zum Konfigurieren der Drahtloseinrichtung (104) unter Verwendung der Konfigurationsinformation die in der nutzerdefinierten Einstellung enthalten ist,
wobei die Drahtloseinrichtung anfänglich eine ursprüngliche Konfigurationseinstellung hat;
wobei das System **dadurch gekennzeichnet ist, dass**
die Drahtloseinrichtung (104) ausgelegt ist zum Zugreifen auf eine Positionsbestimmungseinheit (210) und eine Standorteinheit (2081) an dem Server (118) durch eine Netzwerkverbindung, wobei die Positionsbestimmungseinheit (210) ausgelegt ist zum Bestimmen der Position der Drahtloseinrichtung (104) und die Standorteinheit (2081) ausgelegt ist zum Bestimmen, ob die Position der Drahtloseinrichtung (104) dem Standort entspricht und, wenn bestimmt wird das die Position der Mobileinrichtung dem Standort entspricht,
Veranlassen des Prozessors (202) die Drahtloseinrichtung (104) basierend auf der nutzerdefinierten Einstellung zu konfigurieren,
wobei die Drahtloseinrichtung (104) konfiguriert ist zum Speichern der ursprünglichen Konfigurationseinstellung und, wenn bestimmt wird, dass die Position der Drahtloseinrichtung (104) nicht mehr dem Standort entspricht, Wiederherstellen der ursprünglichen Konfigurationseinstellung.

2. System nach Anspruch 1, wobei das Konfigurationssegment weiter vordefinierte Einstellungen aufweist, die standardisierte Konfigurationsinformation enthalten.

3. System nach Anspruch 2, wobei die vordefinierten Einstellungen wenigstens einem von Folgendem entsprechen: Anforderungen einer staatlichen Luftfahrtbehörde, die mit Linienflugzeugen assoziiert sind oder Anforderungen der Behörde zur Überwachung von Nahrung- und Arzneimitteln, die mit Krankenhäusern assoziiert sind.

4. System nach Anspruch 1, wobei die Konfigurationsinformation wenigstens eine Anwendungskonfiguration und/oder wenigstens eine Moduskonfiguration beinhaltet.

5. System nach Anspruch 4, wobei die wenigstens eine Moduskonfiguration aus der Gruppe von Modi ausgewählt ist, die aus Folgendem besteht: Drahtloseinrichtungsklingel- bzw. -anrufeinstellung, Drahtloseinrichtungslautstärke, Drahtloseinrichtungsanzeigehelligkeit oder Drahtloseinstellungsklingelton.

6. Ein Verfahren zum Konfigurieren einer Drahtloseinrichtung (104) auf nutzerdefinierte Einstellungen, das Folgendes aufweist:
Starten einer Konfigurationsanwendung an der Drahtloseinrichtung (104), wobei die Drahtloseinstellung eine ursprüngliche Konfigurationseinstellung hat;
aus der Ferne
Identifizieren einer nutzerdefinierten Einstellung, die in dem Speicher gespeichert ist, auf welche die Drahtloseinrichtung (104) konfiguriert wird, wobei das Identifizieren, an einem Server entfernt von der Drahtloseinrichtung (104) Feststellen einer Position der Drahtloseinrichtung (104) und Bestimmen eines ersten Standortes basierend auf der Position und Vorsehen des ersten Standortes als die nutzerdefinierte Einstellung aufweist, wenn der Standort wenigstens einer nutzerdefinierten Einstellung entspricht;
Speichern der ursprünglichen Konfigurationseinstellung;
Abrufen von Konfigurationsinformation, die sich auf wenigstens eine Anwendung oder wenigstens einen Modus der Drahtloseinrichtung (104) bezieht,
und zwar aus einem Speicher;
Konfigurieren der Drahtloseinrichtung (104) basierend auf der abgerufenen Konfigurationsinformation, die sich auf die wenigstens eine Anwendung oder
den wenigstens einen Modus bezieht;
nach dem Konfigurieren der Drahtloseinrichtung, Bestimmen dass die Drahtloseinrichtung den ersten Standort verlassen hat, und ansprechend darauf Wiederherstellen der ursprünglichen Konfigurationseinstellung.

7. Verfahren nach Anspruch 6, das weiter Festlegen eines Hotkeys bzw. Tastenkürzels aufweist, um die Start-, Identifizierungs-, Abruf- und Konfigurationsschritte zu bewirken.

## Revendications

1. Un système comprenant un dispositif sans fil (104) et un serveur (118), où ledit dispositif sans fil (104) comprend :
une interface utilisateur,
un processeur de commande (202),
un circuit d'émission et de réception couplé au processeur de commande, et
une mémoire, la mémoire comprenant au moins un segment de configuration qui contient un paramètre défini par l'utilisateur, associé à un emplacement, le paramètre défini par l'utilisateur contenant des informations de configuration pour le dispositif sans fil (104), de sorte que, lors de la définition de paramètres, l'interface utilisateur est adaptée de façon à transmettre le paramètre défini par l'utilisateur au processeur de commande (202), et le processeur de commande amène des informations de configuration à être conservées en mémoire, et lors de la configuration du dispositif sans fil, le processeur de commande (202) est adapté de façon à utiliser le paramètre défini par l'utilisateur de façon à configurer le dispositif sans fil (104) au moyen des informations de configuration contenues dans le paramètre défini par l'utilisateur,
où le dispositif sans fil possède initialement un paramètre de configuration d'origine,
le système étant **caractérisé en ce que**
le dispositif sans fil (104) est adapté de façon à accéder à une unité de positionnement (210) et à une unité de localisation (2081) au niveau du serveur (118) par l'intermédiaire d'une connexion réseau, ladite unité de positionnement (210) étant adapté de façon à déterminer la position du dispositif sans fil (104) et ladite unité de localisation (2081) étant adaptée de façon à déterminer si la position du dispositif sans fil (104) correspond à l'emplacement et, lorsqu'il est déterminé que la position du dispositif mobile correspond à l'emplacement, à amener le processeur de commande (202) à configurer le dispositif sans fil (104) en fonction du paramètre défini par l'utilisateur,
où le dispositif sans fil (104) est configuré de façon à conserver en mémoire le paramètre de configuration d'origine et, lorsqu'il est déterminé que la position du dispositif sans fil (104) ne correspond plus à l'emplacement, à restaurer le paramètre de configuration d'origine.

2. Le système selon la Revendication 1, où le segment de configuration comprend en outre des paramètres prédéfinis contenant des informations de configuration standardisées.

3. Le système selon la Revendication 2, où les paramètres prédéfinis correspondent à au moins un élément parmi des exigences de l'administration de l'aviation fédérale associées à des avions de ligne ou des exigences de l'administration chargée des produits alimentaires et pharmaceutiques associées à des hôpitaux.

4. Le système selon la Revendication 1, où les informations de configuration comprennent au moins une configuration d'application et/ou au moins une configuration de mode.

5. Le système selon la Revendication 4, où la au moins une configuration de mode est sélectionnée dans le groupe de modes se composant de : paramètre de sonnerie de dispositif sans fil, volume de dispositif sans fil, luminosité d'écran de dispositif sans fil ou tonalité de sonnerie de dispositif sans fil.

6. Un procédé de configuration d'un dispositif sans fil (104) selon des paramètres définis par l'utilisateur comprenant :
le lancement d'une application de configuration au niveau du dispositif sans fil (104), le dispositif sans fil possédant un paramètre de configuration d'origine,
l'identification à distance d'un paramètre défini par l'utilisateur conservé en mémoire dans une mémoire selon lequel le dispositif sans fil (104) sera configuré, ladite identification comprenant, au niveau d'un serveur distant du dispositif sans fil (104), l'établissement d'une position du dispositif sans fil (104) et la détermination d'un premier emplacement en fonction de la position et la fourniture du premier emplacement en tant que paramètre défini par l'utilisateur si l'emplacement correspond à au moins un paramètre défini par l'utilisateur,
la conservation en mémoire du paramètre de configuration d'origine,
la récupération d'informations de configuration relatives à au moins une application ou au moins un mode du dispositif sans fil (104) à partir de la mémoire,
la configuration du dispositif sans fil (104) en fonction des informations de configuration récupérées relatives à la au moins une application ou au au moins un mode,
après la configuration du dispositif sans fil, la détermination que le dispositif sans fil a quitté le premier emplacement et, en réponse, la restauration du paramètre de configuration d'origine.

7. Le procédé selon la Revendication 6, comprenant en outre l'établissement d'une touche de raccourci destinée à effectuer les opérations de lancement, d'identification, de récupération et de configuration.
